# EUROPÄISCHE PATENTANMELDUNG

(11) **EP 3 923 188 A1**
(43) Veröffentlichungstag der Anmeldung: **15.12.2021**
(21) Anmeldenummer: 21000145.9
(22) Anmeldetag: 26.05.2021
(51) Int. Cl.: G06K 9/32

(54) **VORRICHTUNG UND EIN VERFAHREN ZUM DETEKTIEREN VON QUALITÄTEN EINES LEBENSMITTELOBJEKTS GEWACHSENER ODER UNREGELMÄSSIGER STRUKTUR**

(30) Priorität: 08.06.2020 DE 102020003443
(71) Anmelder: CSB-System SE, 52511 Geilenkirchen (DE)
(72) Erfinder: Schimitzek, Peter, 52511 Gellenkirchen (DE)
(74) Vertreter: Weihrauch, Frank

(57) **Zusammenfassung**

Die Erfindung betrifft eine Vorrichtung zum Detektieren von Qualitäten eines Lebensmittelobjekts gewachsener oder unregelmäßiger Struktur, aufweisend eine Bilderfassungseinheit, eine Auswertungseinheit und eine Datenausgabeeinheit, wobei die Bilderfassungseinheit eine Kamera aufweist und ausgebildet ist, das Lebensmittelobjekt als optische Daten zu erfassen und die optischen Daten an die Auswertungseinheit übertragbar bereitzustellen, wobei die Auswertungseinheit mit der Bilderfassungseinheit datenverbunden und ausgebildet ist, die optischen Daten von der Bilderfassungseinheit zu erhalten, wobei die Auswertungseinheit ein Bildanalysemodul und ein Klassifikatormodul aufweist, wobei das Bildanalysemodul ausgebildet ist, mittels der optischen Daten vorläufige Merkmalswerte des Lebensmittelobjekts zu extrahieren, mittels der vorläufigen Merkmalswerte mindestens eine Teilerfassungszone des Lebensmittelobjekts festzulegen, mittels der optischen Daten der Teilerfassungszone finale Merkmalswerte des Lebensmittelobjekts zu extrahieren und die finalen Merkmalswerte an das Klassifikatormodul zu übertragen, wobei das Klassifikatormodul ausgebildet ist, mittels der finalen Merkmalswerte das Lebensmittelobjekt einer Klasse zuzuordnen, wobei die Klasse Qualitäten des Lebensmittelobjekt repräsentiert, wobei die Datenausgabeeinheit mit der Auswertungseinheit datenverbunden und ausgebildet ist, die Klasse des Lebensmittelobjekts auszugeben.

## Beschreibung

Die Erfindung betrifft eine Vorrichtung und ein Verfahren zum Detektieren von Qualitäten eines Lebensmittelobjekts gewachsener oder unregelmäßiger Struktur mittels eines Klassifikators, insbesondere zur Detektion von Fleischqualitäten.

Aus dem Stand der Technik ist es bekannt, Lebensmittelobjekte optisch zu erkennen, wenn diese eine durch eine Verarbeitung oder Verpackung definierte äußere Gestalt, wie beispielsweise ein Schokoladenweihnachtsmann oder eine Getränkeflasche, aufweisen. Dann ist es beispielsweise auch möglich, Beschädigungen als Normabweichungen zu detektieren. Nachteilig ist es hierbei, dass solche Lösungen bei Lebensmittelobjekten gewachsener oder sonstiger unregelmäßiger Struktur versagen oder eine nur geringe zutreffende Detektionsrate aufweisen.

Die Aufgabe der Erfindung ist es, eine Vorrichtung zum Detektieren von Qualitäten eines Lebensmittelobjekts aufzuzeigen, welche auch für Lebensmittelobjekte, die eine gewachsene oder sonstige unregelmäßige Struktur aufweisen, insbesondere wie Fleisch, eine hygienische, zuverlässige und genaue Erkennung von Eigenschaften ermöglicht. Ferner ist es die Aufgabe der Erfindung ein solches Verfahren zum Detektieren von Qualitäten eines Lebensmittelobjekts aufzuzeigen.

Die Aufgabe wird in Bezug auf die Vorrichtung durch die im Patentanspruch 1 aufgeführten Merkmale und in Bezug auf das Verfahren durch die im Patentanspruch 5 aufgeführten Merkmale gelöst. Bevorzugte Weiterbildungen ergeben sich aus den jeweiligen Unteransprüchen.

Die erfindungsgemäße Vorrichtung und das erfindungsgemäße Verfahren beziehen sich auf Lebensmittelobjekte gewachsener oder unregelmäßiger Struktur. Als Lebensmittelobjekte gewachsener Struktur im Sinne der vorliegenden Erfindung werden insbesondere Schlachttierkörperobjekte, ganz oder in Teilen, wie ganze Schlachttierkörper oder Teile von Schlachttierkörpern, wie beispielsweise Schinken, Hähnchenschenkel, und Ähnliches, sowie pflanzliche Objekte, ganz oder in Teilen, wie beispielsweise Äpfel, Kartoffeln oder geschnittene Melonen verstanden. Als Lebensmittelobjekte unregelmäßiger Struktur werden solche Lebensmittelobjekte verstanden, deren äußere Beschaffenheit durch eine Verarbeitung mitbestimmt, aber nicht exakt vorherbestimmbar ist, wie beispielsweise Wurst, Käse oder Backwaren. Die Lebensmittelobjekte gewachsener oder unregelmäßiger Struktur werden nachfolgend auch verkürzt als Lebensmittelobjekte bezeichnet.

Die erfindungsgemäße Vorrichtung zum Detektieren von Qualitäten eines Lebensmittelobjekts gewachsener oder unregelmäßiger Struktur weist als Grundkomponenten eine Bilderfassungseinheit, eine Auswertungseinheit und eine Datenausgabeeinheit auf.

Die erfindungsgemäße Bilderfassungseinheit weist eine Kamera auf die so ausgebildet ist, dass mit deren Bilderfassungsbereich das Lebensmittelobjekt ganz oder teilweise erfassbar ist. Bei der Kamera handelt es sich vorzugsweise um eine Bildkamera, mit der von Oberflächenpunkten eines Bilderfassungsbereichs als Bildpunkte Farbwerte in Farbkanälen aufgenommen werden können. Ferner kann es sich um eine Farbkamera zur Erfassung nicht sichtbarer Spektralbereiche (Ultraviolett, Infrarot) handeln. Die Kamera kann zudem Polarisationsfilter aufweisen. Es ist ferner möglich, dass die Kamera lediglich als Schwarz-Weiß-Kamera ausgebildet ist, mit der Lichtintensitätswerte aufgenommen werden können. In weiteren Ausbildungen ist es möglich, dass die Kamera als Tiefenkamera ausgebildet ist oder dass die Bilderfassungseinheit mehrere, insbesondere unterschiedliche Kameras wie eine Bildkamera und eine Tiefenkamera aufweist.

Die Bilderfassungseinheit ist ausgebildet, das Lebensmittelobjekt als optische Daten zu erfassen und die optischen Daten an die Auswertungseinheit übertragbar bereitzustellen. Die optischen Daten liegen als Daten zu Bildpunkten des Lebensmittelobjekts im Erfassungsbereich vor. Die optischen Daten können hierbei insbesondere als Datentupel mit Flächenkoordinatendaten (x, y) und Lichtintensitätswertdaten (g) vorliegen.

Die erfindungsgemäße Auswertungseinheit stellt eine weitere Grundkomponente dar und ist mit der Bilderfassungseinheit mittels einer Datenverbindung datenverbunden. Sie ist dafür ausgebildet, die optischen Daten von der Bilderfassungseinheit zu erhalten. Die Datenverbindung kann sowohl drahtgebunden, als auch drahtlos ausgebildet sein. Es ist zudem möglich, dass die Bilderfassungseinheit und die Auswertungseinheit räumlich getrennt und über eine Datenfernverbindung wie ein LAN oder das Internet verbunden sind.

Die Auswertungseinheit weist ein Bildanalysemodul und ein Klassifikatormodul auf und ist physisch vorzugsweise als ein Rechner mit installierter Software ausgebildet.

Das Bildanalysemodul ist für den Zweck ausgebildet, um aus den von der Bilderfassungseinheit erhaltenen optischen Daten zunächst vorläufige Merkmalswerte des Lebensmittelobjekts zu extrahieren.

Als Merkmalswerte werden insbesondere, ohne hierauf beschränkt zu sein, Helligkeitswerte, Farbwerte, Histogrammmerkmale aus verschiedenen Farbkanälen, Kontrastwerte oder Tiefenmerkmalswerte verstanden.

Das Bildanalysemodul ist ausgebildet, anhand solcher Merkmalswerte mindestens eine Teilerfassungszone des Lebensmittelobjekts festzulegen. Als vorläufige Merkmalswerte werden solche Merkmalswerte verstanden, mittels derer die mindestens eine Teilerfassungszone des Lebensmittelobjekts festgelegt wird. Als eine Teilerfassungszone des Lebensmittelobjekt wird ein Bereich verstanden, der räumlich in Relation zu dem optisch erfassbaren Bereich eingeschränkt ist. Es handelt sich somit um einen Ausschnitt der Oberfläche des Lebensmittelobjekts. Die Teilerfassungszone ist vorzugsweise ein in sich abgeschlossener Bereich mit einer umlaufenden Abgrenzung; sie kann aber auch in Gestalt mehrerer Bereiche vorliegen, die nicht mit einander verbunden sind. Der Bereich, der optisch erfassbar aber nicht Teilerfassungszone ist, wird im Nachfolgenden als Umgebungszone bezeichnet.

Die Einschränkung auf die Teilerfassungszone anhand der vorläufigen Merkmalswerte kann beispielsweise mit Hilfe von statischen oder dynamischen Kriterien durchgeführt werden. Als ein statisches Kriterium ist beispielsweise ein unabhängig von den Helligkeitswerten in der Bildaufnahme vorab festgelegter Helligkeitswert zu verstehen. Als ein dynamisches Kriterium ist es beispielsweise zu verstehen, wenn zunächst anhand der Helligkeitswerte der Bildaufnahme zunächst ein Durchschnittshelligkeitswert bestimmt wird und dann beispielsweise ein bestimmter Prozentwert des Durchschnitthelligkeitswertes der Einschränkung zu Grunde gelegt wird. Die statischen oder dynamischen Kriterien können beispielsweise als ein Schwellwert, als ein Wertekorridor oder als geometrische Kriterien wie Formen oder Abstände vorliegen.

Als ein Beispiel kann ein Schinken einen hellen Abschnitt aufweisen. Dieser helle Abschnitt weist als Merkmalswerte beispielsweise Helligkeitswerte auf, die über einem statischen oder dynamischen Schwellwert liegen und sich so von den Helligkeitswerten der übrigen Abschnitte des Schinkens unterscheiden. Diese Helligkeitswerte werden als vorläufige Merkmalswerte von dem Bildanalysemodul beispielsweise verarbeitet und genutzt, um eine Teilerfassungszone festzulegen, die sich räumlich über den hellen Abschnitt erstreckt.

Das Bildanalysemodul ist ferner ausgebildet, mittels der optischen Daten der Teilerfassungszone finale Merkmalswerte des Lebensmittelobjekts zu extrahieren. Dies bedeutet, dass hierbei ausschließlich die optischen Daten aus der Teilerfassungszone für das Extrahieren von Merkmalswerten herangezogen werden. Diese allein auf der Teilerfassungszone beruhenden Merkmalswerte werden als die finalen Merkmalswerte im Sinne der vorliegenden Erfindung verstanden.

Der Fachmann ist in der Regel bestrebt, Merkmalswerte auf eine möglichst breite Basis zu stellen, um ein robustes Auswertungsergebnis zu erlangen. Es wurde vorliegend jedoch überraschend gefunden, dass trotz der geringeren Datenbasis an optischen Daten durch die bewusste Beschränkung auf einen besonderen Teilerfassungsbereich die so gewonnenen finalen Merkmalswerte das Lebensmittelobjekt in seiner Gesamtheit besser repräsentieren können sowie eine bessere Erkennung von Qualitäten ermöglicht, als wenn Merkmalswerte auch aus der Umgebungszone einbezogen werden.

Die finalen Merkmalswerte können insbesondere eine andere Merkmalskategorie als die vorläufigen Merkmalswerte aufweisen.

Im genannten Beispiel des Schinkens können die Helligkeitswerte die vorläufigen Merkmalswerte sein, mittels derer das Bildanalysemodul die Teilerfassungszone festlegt. Als finale Merkmalswerte werden dann beispielsweise Kontrastwerte aus der Teilerfassungszone extrahiert.

Die Auswertungseinheit ist ausgebildet, die von dem Bildanalysemodul so gewonnenen finalen Merkmalswerte an das Klassifikatormodul zu übertragen.

Das Klassifikatormodul erhält somit ausschließlich die finalen Merkmalswerte. Es ist ausgebildet, mittels der finalen Merkmalswerte das Lebensmittelobjekt einer Klasse zuzuordnen, wobei die Klasse Qualitäten des Lebensmittelobjekts repräsentiert.

Als Klasse ist eine benutzerdefinierte Einteilung unterschiedlicher Lebensmittelobjekte anhand von deren Beschaffenheit zu verstehen. Da eine Klasse anhand von Beschaffenheiten, also Qualitäten definiert ist, liegt mit der Zuordnung des Lebensmittelobjekts zu einer Klasse die Aussage vor, dass dieses Lebensmittelobjekt die Qualitäten aufweist, die der Festlegung der Klasse zu Grunde liegen.

Vorzugsweise werden die finalen Merkmalswerte dem Klassifikationsmodul als Merkmalswerttupel zur Verfügung gestellt. Die Merkmalswerttupel sind dann mittels eines Klassifikationsalgorithmus einem Merkmalswerttupelbereich zuordenbar, wobei jeder Merkmalswerttupelbereich einer Klasse entspricht.

Die erfindungsgemäße Datenausgabeeinheit ist mittels einer weiteren Datenverbindung mit der Auswertungseinheit datenverbunden und ausgebildet, die Klasse des Lebensmittelobjekts auszugeben. Für diese weitere Datenverbindung gelten die Beschreibungsinhalte zu der Datenverbindung zwischen Bilderfassungseinheit und der Auswertungseinheit in entsprechender Weise.

Die Datenausgabeeinheit ist hierbei im weiten Sinne zu verstehen. Es kann sich insbesondere um eine Datenausgabeeinheit wie einen Monitor oder Drucker handeln. Als Datenausgabeeinheit ist aber auch ein Datenspeicher oder eine Schnittstelle zur Weiterübertragung der Klasse als das Klassifikationsergebnis an externe elektronische Datenverarbeitungseinrichtungen zu verstehen. Ferner kann die Datenausgabeeinheit auch anhand der Klasse ein Steuersignal erzeugen, mit dem Betriebszustände von betrieblichen Anlagen wie einer Sortiereinrichtung oder einer Etikettierungs- oder Verpackungseinrichtung gesteuert werden können.

Mit der erfindungsgemäße Vorrichtung wird eine Lösung aufgezeigt, welche wesentliche Vorteile gegenüber dem Stand der Technik aufweist. Es werden Methoden der klassischen Bildanalyse mit Methoden aus dem Bereich der künstlichen Intelligenz, nachfolgend KI genannt, kombiniert.

Die Vorrichtung weist insbesondere nachfolgende Vorteile auf.

Insbesondere ist es vorteilhaft, dass eine besonders hohe Rate einer korrekten Feststellung von Qualitäten eines Lebensmittelobjekts erreicht wird. Somit wird eine hohe Zuverlässigkeit erreicht und die Vorrichtung kann insbesondere zur automatischen Steuerung von Verarbeitungsprozessen eingesetzt werden.

Ferner ist es vorteilhaft, dass das Klassifikationsmodul mit einer reduzierten Datenmenge betrieben werden kann. Dies erleichtert es insbesondere, die Auswertungseinheit anlagentechnisch aufzuteilen, so dass das Bildanalysemodul und das Klassifikationsmodul räumlich getrennt und über eine Datenfernverbindung verbunden angeordnet werden können.

Gemäß einer vorteilhaften Weiterbildung ist die erfindungsgemäße Vorrichtung dadurch gekennzeichnet, dass das Bildanalysemodul ausgebildet ist, mittels der vorläufigen Merkmalswerte mindestens eine weitere Teilerfassungszone festzulegen und mittels der optischen Daten der weiteren Teilerfassungszone weitere finale Merkmalswerte des Lebensmittelobjekts zu extrahieren und dass das Klassifikationsmodul ausgebildet ist, mittels der weiteren finalen Merkmalswerte das Lebensmittelobjekt einer Klasse zuzuordnen, wobei die Klasse Qualitäten des Lebensmittelobjekt repräsentiert.

Nach dieser Weiterbildung ist das Bildanalysemodul ausgebildet, zusätzlich zu der Teilerfassungszone, nachfolgend auch die erste Teilerfassungszone genannt, eine weitere Teilerfassungszone, nachfolgend auch die zweite Teilerfassungszone genannt, festzulegen. Es können auch mehrere weitere Teilerfassungszonen, also eine dritte Teilerfassungszone und so weiter vorliegen.

Die zweite Teilerfassungszone wird ebenfalls mittels der vorläufigen Merkmalswerte festgelegt, wobei es sich vorzugsweise um vorläufige Merkmalswerte einer anderen Merkmalskategorie handelt. Als Merkmalswertkategorie werden unterschiedliche Arten von Merkmalswerten wie beispielsweise Helligkeitswerte oder Kontrastwerte verstanden. So kann beispielsweise die erste Teilerfassungszone anhand von Helligkeitswerten und die zweite Teilerfassungszone anhand von Kontrastwerten festgelegt sein.

Die erste und die zweite Teilerfassungszone können insbesondere unterschiedliche räumliche Bereiche sein, wobei diese disjunkt sein und somit gänzlich unterschiedliche Abschnitte des Lebensmittelobjekt betreffen können. Es können aber auch Teilüberschneidungen der räumlichen Bereiche vorliegen. Ferner kann der räumliche Bereich der einen Teilerfassungszone ein Ausschnitt der anderen Teilerfassungszone sein. Im Extremfall können die Teilerfassungszonen sogar übereinstimmende räumliche Bereiche sein.

Das Bildanalysemodul ist gemäß dieser Weiterbildung ausgebildet, mittels der optischen Daten der weiteren Teilerfassungszone weitere finale Merkmalswerte des Lebensmittelobjekts zu extrahieren.

Es werden hierbei ausschließlich die optischen Daten aus der weiteren (zweiten) Teilerfassungszone für das Extrahieren von Merkmalswerten herangezogen. Diese allein auf der weiteren (zweiten) Teilerfassungszone beruhenden Merkmalswerte werden in gleicher Weise wie die aus der ersten Teilerfassungszone extrahierten Merkmalswerte als finale Merkmalswerte in Sinne der vorliegenden Erfindung verstanden.

Die finalen Merkmalswerte aus der zweiten Teilerfassungszone können insbesondere eine andere Merkmalskategorie als die vorläufigen Merkmalswerte, mittels derer die zweite Teilerfassungszone festgelegt ist, aufweisen.

Zudem können die finalen Merkmalswerte aus der ersten Teilerfassungszone und die finalen Merkmalswerte aus der zweiten Teilerfassungszone unterschiedlichen Merkmalswertkategorien, aber auch der gleichen Merkmalswertkategorie zugehören.

Beispielsweise ist es möglich, wie beschrieben anhand der Helligkeitswerte eines hellen Abschnitts eines Schinkens eine erste Teilerfassungszone festzulegen und aus dieser ersten Teilerfassungszone Kontrastwerte als finale Merkmalswerte zu extrahieren. Gemäß der vorteilhaften Weiterbildung kann in Fortbildung dieses Beispiels anhand von Farbwerten eine zweite Teilerfassungszone festgelegt werden. Aus dieser zweiten Teilerfassungszone können als weitere finale Merkmalswerte ebenfalls Kontrastwerte, aber beispielweise auch Helligkeitswerte extrahiert werden.

Diese Weiterbildung ermöglicht vorteilhaft eine weitere Erhöhung der Rate einer korrekten Erkennung von Beschaffenheiten des Lebensmittelobjekts.

Entsprechend einer weiteren vorteilhaften Weiterbildung weist die Vorrichtung eine Tiefenkamera auf.

Die Tiefenkamera kann dabei beispielsweise als Stereokamera oder als TOF (Time of Flight) - Kamera ausgebildet sein. Die Tiefenkamera kann dabei die einzige Kamera der Bilderfassungseinheit sein. Vorzugsweise liegt jedoch eine Kombination aus Bildkamera und Tiefenkamera vor.

Diese vorteilhafte Weiterbildung ermöglicht es, Tiefenwerte als vorläufige Merkmalswerte und optional auch Tiefenwerte als finale Merkmalswerte durch das Bildanalysemodul zu extrahieren.

Insbesondere kann somit vorteilhaft beispielsweise eine Teilerfassungszone mittels Tiefenwerten festgelegt werden, wenn dies durch die von einer Bildkamera erfassten optischen Daten des Lebensmittelobjekts nicht möglich wäre. Nachfolgend können dann mittels der optischen Daten der Teilerfassungszone durch das Bildanalysemodul finale Merkmalswerte extrahiert werden.

Gemäß einer weiteren vorteilhaften Weiterbildung weist die Vorrichtung zusätzlich ein Transportsystem auf. Vorzugsweise handelt es sich hierbei um ein Transportband oder ein Carriersystem, mittels dessen das Lebensmittelobjekt in einer Verarbeitungslinie transportiert wird. Das Transportsystem und die Bilderfassungseinheit sind so zueinander angeordnet, dass das Lebensmittelobjekt relativ zu der Bilderfassungseinheit bewegt wird.

Somit kann insbesondere in einem laufenden Verarbeitungsprozess in Echtzeit eine Erkennung von Qualitäten der Lebensmittelobjekte durchgeführt werden. Es ist vorteilhaft möglich, nachfolgende Verarbeitungsschritte von dem Ergebnis dieser Erkennung von Qualitäten abhängig zu machen. Insbesondere kann dies bevorzugt auch automatisch erfolgen, indem die Datenausgabeeinheit dazu ausgebildet ist, je nach Ergebnis der Klassifikation unterschiedliche Steuerbefehle zu erzeugen, welche dann nachfolgende Verarbeitungsschritte, wie beispielsweise eine Etikettierung oder auch eventuelle Nachbehandlung oder Ausschleusung zur manuellen Nachbegutachtung, durch Ansteuerung der betreffenden Anlagenteile, auslösen können.

Das erfindungsgemäße Verfahren zum Detektieren von Qualitäten eines Lebensmittelobjekts gewachsener oder unregelmäßiger Struktur wird mittels einer Bilderfassungseinheit, einer Auswertungseinheit, die ein Bildanalysemodul und ein Klassifikatormodul aufweist, und einer Datenausgabeeinheit durchgeführt, wobei die Bilderfassungseinheit mit der Auswertungseinheit und die Auswertungseinheit mit der Datenausgabeeinheit datenverbunden sind. Insoweit gelten die Beschreibungsabschnitte zur erfindungsgemäßen Vorrichtung in entsprechender Weise auch für das erfindungsgemäße Verfahren. Ferner gelten für das erfindungsgemäße Verfahren in entsprechender Weise auch die weiteren Beschreibungsabschnitte zu der erfindungsgemäßen Vorrichtung. Dies gilt insbesondere, aber nicht ausschließlich für die Definitionen wie beispielsweise für vorläufige Merkmalswerte, finale Merkmalswerte, Merkmalswertkategorie, Teilerfassungszone, Umgebungszone, Qualitäten, Klasse, Lebensmittelobjekte und so weiter.

Das erfindungsgemäße Verfahren weist folgende Verfahrensschritte auf:
a) Erfassen des Lebensmittelobjekts als optische Daten durch die Bilderfassungseinheit,
b) Übertragen der optischen Daten an die Auswertungseinheit,
c) Extrahieren von vorläufigen Merkmalswerten des Lebensmittelobjekts durch das Bildanalysemodul der Auswertungseinheit,
d) Festlegen mindestens einer Teilerfassungszone des Lebensmittelobjekts durch das Bildanalysemodul anhand der vorläufigen Merkmalswerte,
e) Extrahieren von finalen Merkmalswerten des Lebensmittelobjekts durch das Bildanalysemodul mittels der optischen Daten der Teilerfassungszone und übertragen der finalen Merkmalswerte an das Klassifikatormodul,
f) Zuordnen des Lebensmittelobjekts zu einer Klasse anhand der finalen Merkmalswerte, wobei die Klasse Qualitäten des Lebensmittelobjekts repräsentiert, und übertragen an die Datenausgabeeinheit
g) Ausgeben der zugeordneten Klasse mittels der Datenausgabeeinheit,

Im Folgenden werden die Verfahrensschritte näher beschrieben:

### a) Erfassen des Lebensmittelobjekts als optische Daten durch die Bilderfassungseinheit

In dem Verfahrensschritt a) wird das Lebensmittelobjekt als optische Daten durch die Bilderfassungseinheit erfasst. Hierzu werden durch eine Kamera der Bilderfassungseinheit Bildpunkte von dem Lebensmittelobjekt erzeugt, die Flächenkoordinatendaten (x, y) aufweisen. Ferner sind den Bildpunkten und somit den Flächenkoordinatendaten (x, y) beispielsweise Lichtintensitätswertdaten (g) oder beispielsweise bei einer Tiefenkamera Tiefenwerte als Tiefendaten (z) zugeordnet.

### b) Übertragen der optischen Daten an die Auswertungseinheit

In dem Verfahrensschritt b) werden die optischen Daten über die Datenverbindung zwischen der Bilderfassungseinheit und der Auswertungseinheit in an sich bekannter Weise übertragen, so dass diese für die Auswertungseinheit für eine weitere Datenverarbeitung zur Verfügung stehen.

### c) Extrahieren von vorläufigen Merkmalswerten des Lebensmittelobjekts durch das Bildanalysemodul der Auswertungseinheit

In dem Verfahrensschritt c) werden durch das Bildanalysemodul der Auswertungseinheit die von der Bilderfassungseinheit erhaltenen optischen Daten ausgewertet und hieraus vorläufige Merkmalswerte extrahiert. Für die Merkmalswerte gelten die Beschreibungsinhalte zur Vorrichtung in entsprechender Weise. Es kann sich also insbesondere um Helligkeitswerte, Kontrastwerte, Farbwerte oder Tiefenmerkmalswerte oder um eine beliebige Kombination hiervon handeln.

### d) Festlegen mindestens einer Teilerfassungszone des Lebensmittelobjekts durch das Bildanalysemodul anhand der vorläufigen Merkmalswerte

In dem Verfahrensschritt d) wird mindestens eine Teilerfassungszone des Lebensmittelobjekts mittels der vorläufigen Merkmalswerte durch das Bildanalysemodul festgelegt.

### e) Extrahieren von finalen Merkmalswerten des Lebensmittelobjekts durch das Bildanalysemodul mittels der optischen Daten der Teilerfassungszone und übertragen der finalen Merkmalswerte an das Klassifikatormodul

In dem Verfahrensschritt e) extrahiert das Bildanalysemodul der Auswertungseinheit mittels der optischen Daten der Teilerfassungszone die finalen Merkmalswerte. Die finalen Merkmalswerte werden allein aus der Teilerfassungszone erzeugt, während in diesem Verfahrensschritt aus der Umgebungszone keine optische Daten verarbeitet werden. Die finalen Merkmalswerte können sich wie die vorläufigen Merkmalswerte darstellen, doch sie können auch von ihnen abweichen. Sie werden an das Klassifikatormodul übertragen und stehen dort für die weitere Datenverarbeitung zur Verfügung.

### f) Zuordnen des Lebensmittelobjekts zu einer Klasse anhand der finalen Merkmalswerte, wobei die Klasse Qualitäten des Lebensmittelobjekts repräsentiert, und übertragen an die Datenausgabeeinheit

In dem Verfahrensschritt f) führt dass Klassifikatormodul der Auswertungseinheit die Zuordnung des Lebensmittelobjekt zu einer Klasse durch. Diese Zuordnung wird auf der Grundlage der finalen Merkmalswerte durchgeführt. Hierbei führt das Klassifikationsmodul eine Zuordnung der finalen Merkmalswerte zu vorher definierten Bereichen von Merkmalswerten durch. Mit der Klasse steht die Art des Lebensmittelobjekts fest. Da die Beschaffenheiten der Art bekannt sind, liegen nun auch die Beschaffenheitsinformationen zu dem überprüften Lebensmittelobjekt vor. Die von dem Klassifikator zugeordnete Klasse wird mittels der weiteren Datenverbindung zwischen der Auswertungseinheit und der Datenausgabeeinheit an die Datenausgabeeinheit übertragen. Es ist auch möglich, dass unmittelbar in einem Datenspeicher der Auswertungseinheit Beschaffenheitsangaben, also Qualitäten, zu der Klasse hinterlegt sind und dass diese Beschaffenheitsangaben an die Datenausgabeeinheit übertragen werden.

Die Datenausgabeeinheit kann beispielsweise ein Monitor sein, aus dessen Anzeige dann das Bedienpersonal Informationen zu dem überprüften Lebensmittelobjekt entnehmen kann.

Es gilt auch in Bezug auf das Verfahren, dass überraschend gefunden wurde, dass mittels des erfindungsgemäßen Verfahrens eine höhere Rate zutreffender Detektionen von Qualitäten erreicht werden kann, obwohl für die Merkmalswerte eine auf den Teilerfassungsbereich beschränkte und damit geringere Datenbasis genutzt wird.

Eine vorteilhafte Weiterbildung des Verfahrens zum Detektieren von Qualitäten eines Lebensmittelobjekts gewachsener oder unregelmäßiger Struktur ist dadurch gekennzeichnet, dass das Verfahren folgende zusätzliche Verfahrensschritte aufweist:
d1) Festlegen mindestens einer weiteren Teilerfassungszone des Lebensmittelobjekts durch das Bildanalysemodul mittels der vorläufigen Merkmalswerte
e1) Extrahieren von weiteren finalen Merkmalswerten des Lebensmittelobjekts anhand der optischen Daten der weiteren Teilerfassungszone und übertragen der weiteren finalen Merkmalswerte an das Klassifikatormodul.

Die Weiterbildung ist ferner dadurch gekennzeichnet, dass im Verfahrensschritt f) das Zuordnen des Lebensmittelobjekts zu einer Klasse zusätzlich anhand der weiteren finalen Merkmalswerte erfolgt.

In dem Verfahrensschritt d1) wird mindestens eine weitere Teilerfassungszone festgelegt. Diese weitere Teilerfassungszone wird, wie auch die Teilerfassungszone, mittels der vorläufigen Merkmalswerte durch das Bildanalysemodul der Auswertungseinheit festgelegt, wobei dies vorzugsweise auf der Grundlage von Merkmalswerten einer anderen Merkmalswertkategorie erfolgt.

In dem Verfahrensschritt e1) werden dann mittels der optischen Daten aus der weiteren Teilerfassungszone ebenfalls finale Merkmalswerte extrahiert. Hierbei handelt es sich um die weiteren finalen Merkmalswerte. Die finalen Merkmalswerte aus der Teilerfassungszone und die weiteren finalen Merkmalswerte aus der weiteren Teilerfassungszone werden beide an das Klassifikatormodul übertragen, so dass das Klassifikatormodul dann die Klassenzuordnung auf der so erweiterten Grundlage vornimmt.

In einer fortführenden Weiterbildung ist die Lösung dadurch gekennzeichnet, dass sich die Teilerfassungszone und die weitere Teilerfassungszone zumindest teilweise räumlich überlappen. Besonders vorteilhaft ist diese Weiterbildung insoweit, als die weitere Erhöhung der Genauigkeit der Erkennung von Qualitäten nicht notwendig auf eine räumliche Erweiterung der Teilerfassungszone durch die weitere Teilerfassungszone gestützt wird. Vielmehr ermöglicht die weitere Teilerfassungszone, obwohl sie ganz oder teilweise den selben räumlichen Bereich wie die Teilerfassungszone erfasst, die Generierung von weiteren finalen Merkmalswerten zur weiteren Verbesserung der Erkennung von Qualitäten des Lebensmittelobjekt.

Die Erfindung wird in einem Ausführungsbeispiel näher erläutert.

Gemäß dem Ausführungsbeispiel der Vorrichtung wird auf einem Förderband liegend ein Schinkenfleischteilstück als Oberschale (Gross Noix) transportiert. Das Förderband ist so angeordnet, dass das Schinkenfleischteilstück durch den Erfassungsbereich einer Bildkamera geführt wird. Die Bildkamera ist Teil der Bilderfassungseinheit und erfasst das Schinkenfleischteilstück als optische Daten in Form einer Bildaufnahme.
Die Bilderfassungseinheit ist mit einer als Computer ausgebildeten Auswertungseinheit über eine Datenverbindung verbunden. Die Auswertungseinheit erhält mindestens eine Bildaufnahme des Schinkenfleischteilstücks.
Eine wichtige Qualität von Schinkenfleischteilstücken ist der Grad der Destrukturiertheit. Destrukturierte Schinkenfleischteilstücke zeichnen sich durch eine erhöhte Helligkeit sowie häufig durch eine gröbere Textur aus.

Die Auswertungseinheit weist ein Bildanalysemodul und ein Klassifikatormodul auf. Das Bildanalysemodul erkennt in den Bildpunkten der Bildaufnahme im vorliegenden Ausführungsbeispiel als vorläufige Merkmalswerte unter anderem Helligkeitswerte. Mittels der Helligkeitswerte wird von dem Bildanalysemodul ein Teilerfassungsbereich festgelegt. Aus den Merkmalswerten aus diesem Teilerfassungsbereich werden von dem Bildanalysemodul weitere Merkmalswerte als finale Merkmalswerte extrahiert. Nur diese finalen Merkmalswerte werden an das Klassifikatormodul weitergeleitet. Das Klassifikatormodul führt eine Klassenzuordnung aus. Im vorliegenden Beispiel wird das Schinkenfleischteilstück einer bestimmten Qualitätsklasse zugeordnet. Anhand dieser ermittelten Qualitätsklasse können die nachfolgenden Verarbeitungsschritte festgelegt werden. An die Auswertungseinheit ist mittels der weiteren Datenverbindung als Datenausgabeeinheit eine Steuereinheit angeschlossen. Diese leitet das überprüfte Schinkenfleischteilstück mittels eines Steuerbefehls an eine Sortiervorrichtung verschiedenen Weiterverarbeitungslinien zu. So können auf einer Verarbeitungslinie Schinkenfleischteilstücke einer hohen Qualitätsklasse zu wertvollem Kochschinken weiterverarbeitet werden, während Schinkenfleischteilstücke einer minderen Qualitätsklasse in der Wurstproduktion landen. Außerdem bestimmt die Qualitätsklasse die für eine sichere Konservierung benötigte Menge an Nitritpökelsalz. Daher können die in den Daten der Datenausgabeeinheit enthaltenen Informationen über die Qualitätsklasse des Schinkenfleischteilstücks dazu genutzt werden, dass bei der Nitritpökelsalzkonservierung einerseits nicht mehr gesundheitlich problematisches Nitritpökelsalz zugegeben wird, als für eine Konservierung unbedingt erforderlich ist und andererseits zuverlässig eine Besiedelung durch das Bakterium Clostridium botulinum, welches eine Fleischvergiftung durch das extrem giftige Botulinumtoxin bewirken kann, verhindert wird.

## Patentansprüche

1. Vorrichtung zum Detektieren von Qualitäten eines Lebensmittelobjekts gewachsener oder unregelmäßiger Struktur,
aufweisend eine Bilderfassungseinheit, eine Auswertungseinheit und eine Datenausgabeeinheit,
wobei die Bilderfassungseinheit eine Kamera aufweist und ausgebildet ist, das Lebensmittelobjekt als optische Daten zu erfassen und die optischen Daten an die Auswertungseinheit übertragbar bereitzustellen,
wobei die Auswertungseinheit mit der Bilderfassungseinheit datenverbunden und ausgebildet ist, die optischen Daten von der Bilderfassungseinheit zu erhalten,
wobei die Auswertungseinheit ein Bildanalysemodul und ein Klassifikatormodul aufweist,
wobei das Bildanalysemodul ausgebildet ist,
mittels der optischen Daten vorläufige Merkmalswerte des Lebensmittelobjekts zu extrahieren,
mittels der vorläufigen Merkmalswerte mindestens eine Teilerfassungszone des Lebensmittelobjekts festzulegen,
mittels der optischen Daten der Teilerfassungszone finale Merkmalswerte des Lebensmittelobjekts zu extrahieren und
die finalen Merkmalswerte an das Klassifikatormodul zu übertragen wobei das Klassifikatormodul ausgebildet ist,
mittels der finalen Merkmalswerte das Lebensmittelobjekt einer Klasse zuzuordnen, wobei die Klasse Qualitäten des Lebensmittelobjekts repräsentiert, wobei die Datenausgabeeinheit mit der Auswertungseinheit datenverbunden und ausgebildet ist, die Klasse des Lebensmittelobjekts auszugeben.

2. Vorrichtung zum Detektieren von Qualitäten eines Lebensmittelobjekts gewachsener oder unregelmäßiger Struktur nach Anspruch 1,
**dadurch gekennzeichnet,**
**dass** das Bildanalysemodul ausgebildet ist, mittels der vorläufigen Merkmalswerte mindestens eine weitere Teilerfassungszone festzulegen und mittels der optischen Daten der weiteren Teilerfassungszone weitere finale Merkmalswerte des Lebensmittelobjekts zu extrahieren und
**dass** das Klassifikationsmodul ausgebildet ist, mittels der weiteren finalen Merkmalswerte das Lebensmittelobjekt einer Klasse zuzuordnen, wobei die Klasse Qualitäten des Lebensmittelobjekts repräsentiert.

3. Vorrichtung zum Detektieren von Qualitäten eines Lebensmittelobjekts gewachsener oder unregelmäßiger Struktur nach einem der Ansprüche 1 oder 2,
**dadurch gekennzeichnet,**
**dass** die Bilderfassungseinheit eine Tiefenkamera aufweist.

4. Vorrichtung zum Detektieren von Qualitäten eines Lebensmittelobjekts gewachsener oder unregelmäßiger Struktur nach einem der vorhergehenden Ansprüche,
**dadurch gekennzeichnet,**
**dass** die Vorrichtung ein Transportsystem aufweist das ausgebildet ist, das Lebensmittelobjekt relativ zu der Bilderfassungseinheit zu bewegen.

5. Verfahren zum Detektieren von Qualitäten eines Lebensmittelobjekts gewachsener oder unregelmäßiger Struktur
mittels einer Bilderfassungseinheit, einer Auswertungseinheit, die ein Bildanalysemodul und ein Klassifikatormodul aufweist, und einer Datenausgabeeinheit, wobei die Bilderfassungseinheit mit der Auswertungseinheit und die Auswertungseinheit mit der Datenausgabeeinheit datenverbunden sind,
aufweisend folgende Verfahrensschritte:
a) Erfassen des Lebensmittelobjekts als optische Daten durch die Bilderfassungseinheit,
b) Übertragen der optischen Daten an die Auswertungseinheit,
c) Extrahieren von vorläufigen Merkmalswerten des Lebensmittelobjekts durch das Bildanalysemodul der Auswertungseinheit,
d) Festlegen mindestens einer Teilerfassungszone des Lebensmittelobjekts durch das Bildanalysemodul anhand der vorläufigen Merkmalswerte,
e) Extrahieren von finalen Merkmalswerten des Lebensmittelobjekts durch das Bildanalysemodul mittels der optischen Daten der Teilerfassungszone und übertragen der finalen Merkmalswerte an das Klassifikatormodul,
f) Zuordnen des Lebensmittelobjekts zu einer Klasse anhand der finalen Merkmalswerte, wobei die Klasse Qualitäten des Lebensmittelobjekts repräsentiert, und übertragen an die Datenausgabeeinheit,
g) Ausgeben der zugeordneten Klasse mittels der Datenausgabeeinheit.

6. Verfahren zum Detektieren von Qualitäten eines Lebensmittelobjekts gewachsener oder unregelmäßiger Struktur nach Anspruch 5,
**dadurch gekennzeichnet,**
**dass** das Verfahren folgende zusätzliche Verfahrensschritte aufweist:
d1) Festlegen mindestens einer weiteren Teilerfassungszone des Lebensmittelobjekts durch das Bildanalysemodul mittels der vorläufigen Merkmalswerte,
e1) Extrahieren von weiteren finalen Merkmalswerten des Lebensmittelobjekts anhand der optischen Daten der weiteren Teilerfassungszone und übertragen der weiteren finalen Merkmalswerte an das Klassifikatormodul und dass
im Verfahrensschritt f) das Zuordnen des Lebensmittelobjekts zu einer Klasse zusätzlich anhand der weiteren finalen Merkmalswerte erfolgt.

7. Verfahren zum Detektieren von Qualitäten eines Lebensmittelobjekts gewachsener oder unregelmäßiger Struktur nach Anspruch 6,
**dadurch gekennzeichnet,**
**dass** sich die Teilerfassungszone und die weitere Teilerfassungszone zumindest teilweise räumlich überlappen.
